Europäisches Patentamt

European Patent Office

Office européen des brevets

(11) Publication number:

**0 040 946**
**B1**

(12) **EUROPEAN PATENT SPECIFICATION**

(45) Date of publication of patent specification: **31.07.85**

(21) Application number: **81302210.0**

(22) Date of filing: **19.05.81**

(51) Int. Cl.⁴: **C 02 F 1/78**

(54) Ozonization system for drinking water disinfection.

(30) Priority: **23.05.80 US 152870**

(43) Date of publication of application:
**02.12.81 Bulletin 81/48**

(45) Publication of the grant of the patent:
**31.07.85 Bulletin 85/31**

(84) Designated Contracting States:
**AT BE CH DE FR GB IT LI LU NL SE**

(56) References cited:
**EP-A-0 025 589**
**GB-A-1 521 166**
**US-A-2 405 553**
**US-A-3 748 262**

(73) Proprietor: **AIR PRODUCTS AND CHEMICALS,
INC.**
**P.O. Box 538**
**Allentown, Pennsylvania 18105 (US)**

(72) Inventor: **Byrne, Jeffry Lewis**
**2426 Allen Street**
**Allentown, PA 18104 (US)**
Inventor: **Driscoll, Thomas Martin**
**1837 Ridgeview Drive RD1**
**Allentown, PA 18104 (US)**
Inventor: **Lestochi, Louis Joseph**
**234 Pine Grove Circle**
**Wescosville, PA 18106 (US)**

(74) Representative: **Lucas, Brian Ronald**
**Lucas, George & Co. 135 Westhall Road**
**Warlingham Surrey CR3 9HJ (GB)**

Courier Press, Leamington Spa, England.

## Description

### Technical field

The present invention relates to oxygen recycle ozonization systems and the utilization of the obtained ozone-containing product gas.

### Background of the prior art

It has been demonstrated that the power requirements to generate ozone can be significantly reduced when the charge of the ozone generator is oxygen-enriched air instead of atmospheric air. In addition, the size of the ozone generator required should be drastically reduced when the charge gas is rich in oxygen. However, when the cost of such oxygen is taken into consideration, the use thereof as feed to the ozone generator becomes uneconomical unless the total ozone requirement is very large.

To overcome these cost disadvantages of using oxygen-enriched gas for production of ozone, it has been suggested in the art to reuse the off gas from the ozonization process, taking advantage of its high oxygen content. Thus, it has been proposed to recirculate all of the oxygen-containing off gas, after utilization of the ozonized gas for its intended purpose, back to the ozone generator for reozonization and reuse. In many applications, such as wastewater treatment and water purification, this off gas will contain substantial quantities of contaminants such as nitrogen and carbon dioxide, stripped from material subjected to ozonization treatment. If these contaminants are not removed, they continue progressively to accumulate in the recycle gas charged to the ozone generator, thus diluting the initial desired advantage of using a feed gas to the ozone generator having a high oxygen content. Accordingly, it was proposed to purify the recycle gas before introducing the same to the ozone generator. The needed purification to permit recycling was found to be expensive and has often been deemed impractical from an economics standpoint.

In integrated systems where ozonization is employed in connection with a treating operation utilizing oxygen-rich gas upstream or downstream of the ozonizer, economics may favor the use of oxygen-enriched gas as feed to the ozone generator. This is true, for example, in "activated sludge" installations utilizing oxygen-enriched gas for treatment of sewage, wherein the supernatant treated liquid discharged from the final settling and clarifying tank is subjected to disinfection by treatment with ozone-containing gas. One such integrated system is described, for example, in U.S. Patent No. 4,132,637.

In accordance with the procedure disclosed in the aforesaid U.S. Patent No. 4,132,637, the oxygen-rich off gas from the ozone disinfection step is dried and a portion thereof, containing nitrogen and $CO_2$ contaminants, is recycled to the ozone generator, such portion constituting 30 to 90% of the gaseous effluent from the ozone contacting zone. All or part of the remaining gaseous effluent from the ozone contacting zone is used to supply oxygen-enriched aerating gas employed in the activated sludge treatment plant. Any excess gas not required for use in the activated sludge plant is vented. Means are provided in the activated sludge oxygenation tank to measure the concentration of dissolved oxygen, and thus determine the need for venting part of the gas supplied from the dried ozonizer effluent or addition of make-up oxygen-rich gas from the original source supplying the ozone generator.

While integrated installations such as that described in the aforesaid patent, if properly designed, may be economically attractive, that is not the case when the ozone produced from oxygen-enriched air is to be used in an isolated operation wherein there is no associated process in which the oxygen-rich off gas from the ozone contactor can be utilized. The last named situation obtains, for example, in systems for treating drinking water.

US—A—3,748,362 discloses a system in which the influent water is contacted with ozone and the treated water is totally removed from the system. The spent gas is totally recycled within the ozone generation loop. Build-up of nitrogen in the recycle loop is prevented by passing the spent gas through an adsorber.

GB—A—1,521,166 discloses a system in which the influent water is contacted with a liquid stream containing dissolved ozone. Part of the treated water is removed, pressurized and passed through a packed column where it is brought in contact with a gaseous stream containing ozone, oxygen and from 2—11% by volume nitrogen. The liquid stream leaving the bottom of the packed column is used to treat the influent water. The gas leaving the top of the packed column 7 is dried, expanded and passed through an ozonizer. It is then pressurized and returned to the packed column. The amount of nitrogen present in the gas leaving the top of the packed column is controlled by adjusting the operating pressure of the packed column.

### Brief summary of the invention

Among the objects of present invention, accordingly are to provide an integrated system and process for the economical generation of ozone from oxygen for use in treatment of material where there is no significant supplementary oxygen requirement, such as in the treatment of drinking water.

According to the present invention there is provided a method of treating water with ozone comprising the steps of:

(a) supplying oxygen-rich gas from an external source to an ozone generator wherein an ozone-containing gas is produced,

(b) contacting the generated ozone-containing gas product from (a) with water to be treated, said water having been at least partially stripped of contained contaminant gas including nitrogen and carbon dioxide,

(c) discharging the treated water from (b),

(d) withdrawing wet off gas from said contacting,

(e) drying a major fraction of said wet off gas and recycling the thus dried gas to said ozone generator,

(f) passing a minor purge fraction of said wet off gas from (d) into contact with feed water to strip at least part of contaminant gases from said feed water,

(g) supplying the thus stripped water to (b) in a manner such that said stripped water does not become recontaminated with said contaminant gases, and venting the purge fraction including the contaminant gases thus stripped from said water.

Preferably, the external oxygen-rich gas contains at least 70% by weight oxygen. Advantageously, the ozone generation is effected under conditions to obtain an ozone-containing product gas having from 1—8% (by weight) ozone and, more usually from 1—6% (by weight) ozone. Preferably, the ozone-containing product gas should contain at least 2% (by weight) ozone. Advantageously the gas recycled to said ozone generator constitutes at least about 70% of the total wet gas withdrawn from said water-contacting at (b). Preferably, the volumetric flow rate of the major fraction of the wet off gas relative to the volumetric flow rate of the minor fraction of the wet off gas is controlled so that the molar oxygen flow rate of the vented purge fraction is less than 50% of the molar oxygen flow rate of the external oxygen-rich gas to the ozone generator.

Advantageously, said drying in (e) is carried out under conditions to obtain dried gas having a dewpoint of less than minus 28.9°C (minus 20°F).

Particularly advantageously, the feed water subjected to stripping at (f) is in equilibrium with nitrogen at a partial pressure greater than that of the minor purge fraction of the off gas.

Preferably, the gas introduced to said ozone generator is at a temperature below 37.8°C (100°F) and at a pressure of 68.94 kPa to 344.7 kPa (10 to 50 psia).

Advantageously, the dried gas recycled to said ozone generator contains 50—90% oxygen by weight.

In preferred embodiments of the invention, substantially pure oxygen gas or oxygen-enriched air is charged to an ozone generation loop and the thus obtained product gas containing about 1 to 6% ozone it utilized in ozonization of drinking water or other similar liquid material. The wet off gas from such contacting operation, which will contain a substantial concentration of oxygen (in excess of that contained in atmospheric air) and contaminants, such as nitrogen and carbon dioxide, is split into two fractions. One such fraction is dried and recycled as feed to the ozone generator. The other fraction is employed in stripping at least part of the nitrogen and carbon dioxide contained in the liquid being charged as feed to the ozone contactor, thus reducing the extent of buildup of such contaminants in the recycled gas.

The operation of the invention will be understood and certain of its advantages appreciated from the detailed description which follows read in connection with the accompanying drawings.

Brief description of the drawings

Figure 1 of the drawings is a block flow diagram of a prior art system wherein the off gas from ozonization is utilized in aeration of sewage or municipal waste water.

Figure 2 is a block flow diagram of a system wherein a portion of the off gas from the ozone is dried and recycled, the remainder being vented as a purge stream after destruction of contained residual ozone therein.

Figure 3 is a block flow diagram of a system in accordance with the present invention.

Detailed description of the invention

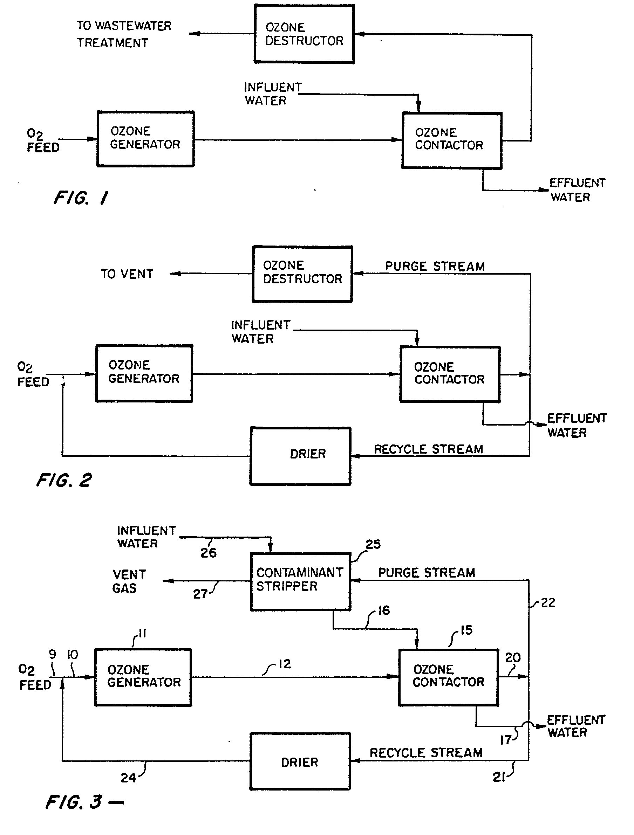

It will be seen that in the system illustrated in Figure 1 as well as that in Figure 2 an "ozone destructor" is employed to avoid discharge of ozone to the atmosphere and/or material corrosion problems in the transfer conduits and equipment. Moreover, not only does the ozone destructor add to equipment and operating costs of these systems but, in addition, a small but valuable amount of ozone product is thus being wasted. In the Figure 2 embodiment, also, the purge stream needed to avoid contaminants build up in the recycle stream, results in large amounts of oxygen being wasted by venting. In the system illustrated in Figure 3 oxygen consumption is less than that required by the system of Figures 1 or 2, resulting in reduced operation costs for oxygen supply.

In the system of the invention as illustrated in Figure 3, a feed gas of high oxygen content is added by line 9 to recycle line 24 and introduced to an ozone generator 11 by line 10. The preferred fresh feed gas is one containing at least 70% and preferably 90% or more oxygen (by weight). Any known type of ozone generator may be employed, preferably one of the silent electric discharge type. The generator is operated under conditions to produce a product gas containing at least 1% and preferably from about 2% to about 6% ozone.

The product gas discharged from the generator by line 12 is sent directly to the point of use, indicated by the ozone contactor 15. In the illustrated embodiment, water to be treated for drinking is introduced into the contactor by line 16 and the thus ozonated water effluent discharged through line 17. The off gas discharged from the contactor 15 by line 20 will be saturated with water at the temperature of the contactor. It will also contain gaseous contaminants such as nitrogen and carbon dioxide stripped from the influent water, as will hereinafter be explained.

The off gas discharged via line 20 is split into a recycle stream 21 and a purge stream 22. The recycle stream, which preferably will generally constitute the major part of the off gas discharged in line 20, is dried to a dewpoint of at least minus 20°F (−29°C), preferably to less than minus 40°F (minus 40°C), and the dried gas is recycled to the ozone generator via line 24. Preferably the recycle gas stream should constitute at least about 70% of the off gas withdrawn from the contactor in line 20.

Water to be purified is introduced into a contaminant stripper 25 by supply line 26 where it is contacted with the purge stream introduced into vessel 25 by line 22. As a result of such contact between the influent water and the purge gas stream, part of the nitrogen and carbon dioxide will be stripped from the influent water, decreasing the quantity of these contaminants admitted to the ozone contactor via line 16.

Stripper 25 may be integrated with ozone contactor 15 by using a common basin. Stripper 25 would be provided as a preliminary liquid stage to the ozone contactor 15 with the gas spaces of the two stages isolated from each other by a wall which penetrates the surface of the liquid.

In the operation as thus far described it will be seen that the relative proportion of the off gas from line 20 which is purged via line 22 will control the oxygen purity of the recycle loop. As the purge stream flow is increased, the oxygen purity of the recycle loop is thereby increased. The vent gas discharged from the stripper 25 by line 27 will contain more nitrogen and less oxygen than the present in the purge gas in line 22. The ozone content of the vent gas will be negligible if the ozone contactor is properly designed, constituting less than 1% of the total ozone content in purge stream 22. For successful stripping of nitrogen, the influent water must be in equilibrium with nitrogen at a partial pressure greater than that of the purge gas.

In this system the flow rate of the volume of the wet off gas of line 22 is controlled relative to the flow rate of the volume of wet off gas of line 21 so that the molar oxygen flow rate of the gas of line 27 is less than about 50 per cent of the molar oxygen flow rate of the high oxygen content feed gas of line 9.

The temperature and pressure ranges of the feed gas to the ozone generator are generally those heretofore normally employed in such operation employing high concentration oxygen feed gas, and depend to large extent upon the particular type of generator employed. In general the feed gas to be introduced into the ozone generator is at a temperature below 120°F (49°C) and preferably lower than 100°F (38°C). Typical operating pressure is 15 to 45 psia (1 to 3 bars), although a pressure as low as 10 psia (0.7 bars) or as high as 50 psia (3.5 bars) may be employed.

The oxygen purity in the recycle loop is a key factor in the effectiveness and economic advantages of the process of the invention. At an oxygen purity in the recycle loop below about 50%, which would result from taking a relatively small fraction of the off gas as the purge stream (line 22), nitrogen stripping would become relatively inefficient. On the other hand, to maintain the oxygen purity in the recycle loop at above 90% would require a high oxygen feed rate that may render the system uneconomical.

A typical operation in practice of the invention is illustrated by (but not limited to) the following example.

Example 1

The projected design need for a facility to purify 15 MGD (56.78 KL/D) water is an ozone system which will produce 350 lbs/day (158.75 kg/D) ozone for an absorbed dosage of 2.5 ppm ozone. The composition of the gas and the design flow rates in the several lines are shown in Table 1.

TABLE 1

| Line | Flow rate lb/hr (kg/hr) | Composition wt % | | | | |
|------|-------------------------|------|------|------|------|------|
| | | $O_2$ | $N_2$ | $O_3$ | $H_2O$ | Other |
| 9 | 112.6  (51.1) | 99.5 | — | — | | |
| 12 | 360.3  (163.4) | 76 | 20 | 4 | | |
| 20 | 340.7  (154.5) | 70 | 28 | 0.4 | 1.5 | |
| 24 | 247.7  (112.4) | 71 | 29 | | | |
| 22 | 89.6  (40.6) | 70 | 28 | | 1.5 | |
| 27 | 90.8  (41.2) | 51.5 | 47 | | 1.5 | |
| 26 | 15 MGD (56.78 KL/D) | 8.9 ppm | 15.3 ppm | | | $CO_2$ 0.4 ppm |

(ppm=parts per million)

An estimate made of the capital and operating costs of a system according to the invention (1) as compared to (2) a typical once through system generating ozone from atmospheric air and (3) a system employing total recycle of the oxygen-rich off gas from the ozone contactor, fully demonstrates the advantages of the invention. These estimates were are based the on use of an ozone generator capable of producing 500 lbs/day ozone from an 80% oxygen feed. The generator produces 2% $O_3$ from air, 4% ozone from $O_2$; the recycle stream to the ozone generator contains 80% $O_2$. Power costs are calculated on a basis of $0.03/KWH and oxygen costs at $60/ton. The system of the invention obtains at these values, a saving of over 30% in equipment costs and almost 10% in operating costs, as compared to a system using air as feed to the ozone generator. As compared to a conventional system feeding high purity oxygen, with total recycle of the off gas, the system of the invention obtains greater than 10% savings in operating costs.

**Claims**

1. A method of treating water with ozone comprising the steps of:

(a) supplying oxygen-rich gas from an external source to an ozone generator wherein an ozone-containing gas is produced,

(b) contacting the generated ozone-containing gas product from (a) with water to be treated, said water having been at least partially stripped of contained contaminant gas including nitrogen and carbon dioxide,

(c) discharging the treated water from (b),

(d) withdrawing wet off gas from said contacting,

(e) drying a major fraction of said wet off gas and recycling the thus dried gas to said ozone generator,

(f) passing a minor purge fraction of said wet off gas from (d) into contact with feed water to strip at least part of contaminant gases from said feed water,

(g) supplying the thus stripped water to (b) in a manner such that said stripped water does not become recontaminated with said contaminant gases, and venting the purge fraction including the contaminant gases thus stripped from said feed water.

2. The method as defined in Claim 1 wherein the external oxygen-rich gas contains at least 70% by weight oxygen.

3. The method as defined in Claim 2 wherein said ozone generation is effected under conditions to obtain an ozone-containing product gas having 1—8% ozone by weight.

4. The method of Claim 2 wherein the volumetric flow rate of the major fraction of the wet off gas relative to the volumetric flow rate of the minor fraction of the wet off gas is controlled so that the molar oxygen flow rate of the vented purge fraction is less than 50% of the molar oxygen flow rate of the external oxygen-rich gas to the ozone generator.

5. The method as defined in Claims 1 or 2 said drying in (e) is carried out under conditions to obtain dried gas having a dewpoint of less than minus 28.9°C (minus 20°F).

6. The method as defined in Claims 1 or 2 wherein the feed water subjected to stripping at (f) is in equilibrium with nitrogen at a partial pressure greater than that of the minor purge fraction of the off gas.

7. The method as defined in Claims 1 or 2 wherein the gas introduced to said ozone generator is at a temperature below 37.8°C (100°F) and at a pressure of 68.94 kPa to 344.7 kPa (10 to 50 psia).

8. The method as defined in Claims 1 or 2 wherein the dried gas recycled to said ozone generator contains 50—90% oxygen by weight.

9. The method as defined in Claim 2 wherein the gas product from said ozone generator contains at least 2% by weight ozone.

10. The method as defined in Claim 2 wherein the gas recycled to said ozone generator constitutes at least 70% of the total wet gas withdrawn from said water-contacting at (b).

**Patentansprüche**

1. Verfahren zur Wasserbehandlung mit Ozon, gekennzeichnet, durch die Stufen:

a. Zufuhr eines sauerstoffreichen Gases von einer äußeren Quelle zu einem Ozongenerator, in dem ein Ozon enthaltendes Gas erzeugt wird,

b. Kontaktbehandlung des erzeugten Ozon enthaltenden Gasproduktes von (a) mit dem zu behandelnden Wasser, wobei aus dem Wasser mindestens teilweise das enthaltene Verunreinigungsgas einschließlich Stickstoff und Kohlendioxid abgetrennt wurde,

c. Ablassen des behandelten Wassers von (b),

d. Abziehen des feuchten Abgases von dieser Kontaktbehandlung,

e. Trocknen einer Hauptfraktion dieses feuchten Abgases und Rückführung des so getrockneten Gases zum Ozongenerator,

f. Einleiten einer Reinigungs- Nebenfraktion des feuchten Abgases von (d) in Kontakt mit Wasserzufluß, und mindestens einen Teil der Verunreinigungsgase von dem Wasserzufluß abzutrennen,

g. Zuführung des so abgetrennten Wassers zu (b) in der Weise, daß das abgetrennte Wasser nicht wieder mit den Verunreinigungsgasen verunreinigt wird, und Auslassen der Reinigungs-Fraktion einschließlich der Verunreinigungsgase, die so von dem Wasserzufluß abgetrennt wurde.

2. Verfahren nach Anspruch 1, dadurch gekennzeichnet, daß das äußere sauerstoffreiche Gas mindestens 70 Gew-% Sauerstoff enthält.

3. Verfahren nach Anspruch 2, dadurch gekennzeichnet, daß die Ozonerzeugung unter Bedingungen durchgeführt wird, bei denen ein Ozon enthaltendes Gasprodukt mit 1 bis 8 Gew-% Ozon erhalten wird.

4. Verfahren nach Anspruch 2, dadurch gekennzeichnet, daß die volumetrische Durchflußgeschwindigkeit der Hauptfraktion des feuchten Abgases im Verhältnis zur volumetrischen Durchflußgeschwindigkeit der Nebenfraktion des feuchten Abgases so geregelt ist, daß die molare Sauerstoffdurchflußgeschwindigkeit der ausgelassenen, Reinigungs- Fraktion weniger als 50% der molaren Sauerstoffdurchflußgeschwindigkeit des äußeren sauerstoffreichen Gases zum Ozongenerator beträgt.

5. Verfahren nach Anspruch 1 oder 2, dadurch gekennzeichnet, daß das Trocknen in (e) unter Bedingungen ausgeführt wird, bei denen ein getrocknetes Gas mit einem Taupunkt von weniger als −28,9°C erhalten wird.

6. Verfahren nach Anspruch 1 oder 2, dadurch gekennzeichnet, daß der Wasserzufluß, der der Abtrennung unter (f) unterworfen wird, im Gleichgewicht ist mit Stickstoff bei einem Partialdruck, der großer als der der Reinigungs- Nebenfraktion des Abgases ist.

7. Verfahren nach Anspruch 1 oder 2, dadurch gekennzeichnet, daß das Gas, das in den Ozongenerator eingelassen wird, eine Temperatur unter 37,8°C und einen Druck von 68,94 kPa bis 344,7 kPa hat.

8. Verfahren nach Anspruch 1 oder 2, dadurch gekennzeichnet, daß das getrocknete Gas, daß zum Ozongenerator zurückgeführt wird, 50 bis 90 Gew-% Sauerstoff enthält.

9. Verfahren nach Anspruch 2, dadurch gekennzeichnet, daß das Gasprodukt aus dem Ozongenerator mindestens 2 Gew-% Ozon enthält.

10. Verfahren nach Anspruch 2, dadurch gekennzeichnet, daß das Gas, das zum Ozongenerator zurückgeführt wird, mindestens 70% des gesamten feuchten Gases bildet, das von der Wasser-Kontaktbehandlung unter (b) abgezogen wird.

**Revendications**

1. Procédé de traitement de l'eau avec de l'ozone, comprenant les étapes suivantes:

(a) on alimente en gaz riche en oxygène provenant d'une source extérieure un générateur d'ozone dans lequel est produit un gaz contenant de l'ozone,

(b) on met en contact le produit gazeux contenant de l'ozone ainsi généré provenant de (a) avec l'eau à traiter, cette eau ayant été au moins partiellement débarrassée des gaz contaminants qu'elle contenait, comprenant l'azote et le dioxyde de carbone,

(c) on décharge l'eau traitée provenant de (b),

(d) on soutire du gaz de décharge humide provenant de ce contact,

(e) on séche une fraction majeure de ce gaz de décharge humide et on recycle le gaz ainsi séché vers le générateur d'ozone,

(f) on fait passer une fraction de purge mineure de ce gaz de décharge humide provenant de (d) au contact d'une eau d'alimentation pour extraire au moins une partie des gaz contaminants de cette eau d'alimentation,

(g) on envoie l'eau ainsi extraite vers (b) de telle sorte que l'eau extraite ne soit pas à nouveau recontaminée avec ces gaz contaminants et l'on rejette la fraction de purge comprenant les gaz contaminants ainsi extraits de l'eau d'alimentation.

2. Procédé suivant la revendication 1, dans lequel le gaz extérieur riche en oxygène contient au moins 70% en poids d'oxygène.

3. Procédé suivant la revendication 2, dans lequel la génération d'ozone est effectuée dans des conditions telles que l'on obtienne un produit gazeux contenant de l'ozone ayant 1 à 8% d'ozone en poids.

4. Procédé suivant la revendication 2, dans lequel le débit volumétrique de la fraction majeure du gaz de décharge humide par rapport au débit volumétrique de la fraction mineure du gaz de décharge humide est contrôlé pour que le débit d'oxygène molaire de la fraction de purge rejetée soit inférieur à 50% du débit d'oxygène molaire du gaz extérieur riche en oxygène allant vers le générateur d'ozone.

5. Procédé suivant la revendication 1 ou 2, dans lequel le séchage de l'étape (e) est effectué dans des conditions telles qu'on obtienne un gaz séché ayant un point de rosée inférieur à −28,9°C (−20°F).

6. Procédé suivant la revendication 1 ou 2, dans lequel l'eau d'alimentation soumise à une extraction en (f) est en équilibre avec l'azote à une pression partielle supérieure à celle de la fraction mineure de purge du gaz de décharge.

7. Procédé suivant la revendication 1 ou 2, dans lequel le gaz introduit dans le générateur de zone se trouve à une température inférieure à 37,8°C (100°F) et sous une pression de 68,94 kPa à 344,7 kPa (10 à 50 psia).

8. Procédé suivant la revendication 1 ou 2, dans lequel le gaz séché recyclé vers le générateur d'ozone contient 50 à 90% d'oxygène en poids.

9. Procédé suivant la revendication 2, dans lequel le produit gazeux provenant du générateur d'ozone contient au moins 2% en poids d'ozone.

10. Procédé suivant la revendication 2, dans lequel le gaz recyclé vers le générateur d'ozone constitue au moins 70% du gaz humide total soutiré à la suite du contact avec l'eau en (b).

FIG. 1

FIG. 2

FIG. 3 —

1